(19) **Europäisches Patentamt European Patent Office Office européen des brevets**

(11) **EP 3 122 532 B1**

(12) **EUROPEAN PATENT SPECIFICATION**

(45) Date of publication and mention of the grant of the patent:
**29.09.2021 Bulletin 2021/39**

(51) Int Cl.:
***B29C 48/62*** *(2019.01)*      ***B29C 48/40*** *(2019.01)*
***B29C 48/60*** *(2019.01)*

(21) Application number: **15875203.0**

(22) Date of filing: **28.12.2015**

(86) International application number:
**PCT/CN2015/099285**

(87) International publication number:
**WO 2016/107527 (07.07.2016 Gazette 2016/27)**

(54) **A CO-ROTATING SELF-CLEANING TWO SCREW EXTRUDER WITH AN INTERNAL BAFFLE**

MITROTIERENDER SELBSTREINIGENDER DOPPELSCHNECKENEXTRUDER MIT INTERNER ABLENKPLATTE

EXTRUDEUSE À DEUX VIS, AUTONETTOYANTE, COROTATIVE, PRÉSENTANT UN DÉFLECTEUR INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2014 CN 201410837490**

(43) Date of publication of application:
**01.02.2017 Bulletin 2017/05**

(73) Proprietor: **Guangdong Industry Technical College**
**Guangzhou, Guangdong 510300 (CN)**

(72) Inventors:
• **XU, Baiping**
  **Guangzhou**
  **Guangdong 510300 (CN)**
• **YU, Huiwen**
  **Guangzhou**
  **Guangdong 510300 (CN)**
• **KONG, Ping**
  **Guangzhou**
  **Guangdong 510300 (CN)**
• **WU, Lixuan**
  **Guangzhou**
  **Guangdong 510300 (CN)**
• **LI, Jiangang**
  **Guangzhou**
  **Guangdong 510300 (CN)**
• **WANG, Meigui**
  **Guangzhou**
  **Guangdong 510300 (CN)**

(74) Representative: **Ström & Gulliksson AB**
**P.O. Box 4188**
**203 13 Malmö (SE)**

(56) References cited:
**WO-A1-03/020493**      **WO-A1-2013/128463**
**CN-A- 102 922 616**      **CN-A- 103 112 193**
**CN-A- 104 527 025**      **CN-U- 204 471 829**
**DE-A1-102008 029 306**   **JP-A- 2004 284 195**
**US-A- 3 667 733**        **US-A- 4 300 839**

• **None**

## Description

**Technical Field**

The present invention relates to a processing technique for extrusion by two screws, particularly a co-rotating, self-cleaning extruder with two screws, one of which has an internal baffle, and the processing method thereof.

**Background Art**

Twin screw extruders, which have an excellent self-cleaning function, are popular devices of mixing and melt compounding. This type of apparatus is composed of the barrel and two identical screws that are arranged in parallel along the axis of the barrel. In order to improve mixing, multi-threaded configurations are frequently used to generate different flow topology paths. For example, conventional twin screw extruders with two threads are commonly used. From the point of view of the topology, this configuration will generate three separate independent flow channels, but the materials in the different channels cannot mix with one another. Thus when a fluctuation in feed content appears, it also causes a fluctuation in product quality. Only in the kneading mixing sections can the materials from different screw channels mix together. However, such structures will lead to a very high shear rate, stagnation, abrupt increase in energy consumption, and the existence of a dead zone, and will cause a degradation and reduction in the self-cleaning function.

On the other hand, because of the intermeshing movement of the screws, using a multi-threaded screw configuration will result in a decrease in the screw channel depth, thus decreasing the throughput. Since conventional twin screws have the same geometrical shape and same space in flow channels, no asymmetry break-up effect is introduced in the flow channels. It is commonly accepted that the nip region plays a significant role in mixing enhancement. Moreover, there is no elongation action owing to nearly the same channel volume, which is necessary for melting and dispersive mixing for polymer materials. In addition, the screw channels are always partially filled during normal operation, thus the nearly constant cross-section of the flow channel in the conventional twin screw extruder will result in a reduction in the efficiency of melting and mixing. Therefore, a high speed is required to achieve the high shear rate, and a very large screw length-to-diameter ratio is needed to extend the residence time. Thus, the requirements of high throughput and good mixing are both met for current engineering applications. However, all of these measurements will cause many problems such as huge energy consumption, lower efficiency, degradation of materials, and so on. WO03/020493A1 discloses a prior-art multiple-screw extruder. Further prior art is disclosed in WO2013/128463A1, US4300839A, DE102008029306A1 and US3667733A.

**Contents of the Invention**

The primary purpose of the present invention is to overcome the abovementioned defects and deficiencies associated with the current technology by providing a self-cleaning, plasticizing, and extruding apparatus with co-rotating two screws, one of which has an internal baffle. This apparatus materializes the advantages of chaotic mixing, topology chaos, and the action of the elongation force field to improve the processing efficiency and degree of mixing effectively.

Another purpose of the present invention is to provide a self-cleaning, plasticizing, and extrusion method with co-rotating two screws, one of which has an internal baffle, carried out by the abovementioned apparatus.

The purposes of the present invention are carried out by the following technical solutions: a co-rotating, self-cleaning extruder with two screws, one of which features an internal baffle, comprising a screw mechanism and a barrel. Said screw mechanism is located horizontally inside of the barrel and is comprised of the first and second screw, which intermesh with each other. The first screw has one thread and the second screw has two threads. The first screw has an internal baffle mounted in the screw channel and the baffle's height is lower than the depth of the screw channel. The first and second screws rotate at the same speed and keep engaging with each other all the time. The first screw surface, including the baffle, and the second screw surface can achieve the self-cleaning function.

Since the first and second screws are all tangent to the inner wall of the barrel, the flow channels are formed between the first and the second screws and the inner wall of the barrel. The cross-sectional curves of the first and the second screw consist of several arcs of different radii while the number of arcs of each screw is the same.

As a preferred solution, say the first and second screws consist of 8 arcs. The arcs of the first screw are $M_1M_2$, $M_2M_3$, $M_3M_4$, $M_4M_5$, $M_5M_6$, $M_6M_7$, $M_7M_8$, and $M_8M_1$, in turn; and for the second screw, $N_1N_2$, $N_2N_3$, $N_3N_4$, $N_4N_5$, $N_5N_6$, $N_6N_7$, $N_7N_8$, and $N_8N_1$.

The arc $M_1M_2$ is engaged with the arc $N_1N_2$, correspondingly, $M_2M_3$ with $N_2N_3$, $M_3M_4$ with $N_3N_4$, $M_4M_5$ with $N_4N_5$, $M_6M_7$ with $N_6N_7$, $M_7M_8$ with $N_7N_8$, and $M_8M_1$ with $N_8N_1$.

Within the variation of the z position of the baffle, the polar angle of the baffle either keeps constant or varies periodically; similarly, the baffle's height also remains constant or changes periodically (see below).

(1) The rotation center of said first screw is $O_1$, arc $M_5M_6$ corresponds to the baffle, the polar angle degree of the baffle experiences cyclic or non-cyclic changes, and the polar angle degree is the angle between the centerline of the baffle $O_1A$ and the axis $O_1M_3$.

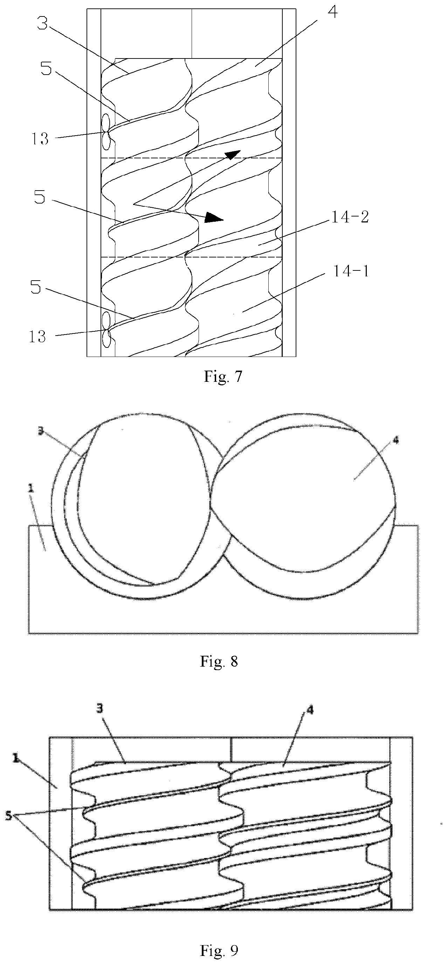

(2) Within the first screw, the height of said baffle is constant, or experiences cyclic changes with an increase of the corresponding axial position. The inner cavity of said barrel consists of two cylinder grooves which are communicated, whose cross-sections appear to be a hole with a 'figure 8' shape.

According to the motion direction of the materials to be processed, the inner section is divided into a solid conveying zone, melting zone, venting zone, and mixing and metering zone, and said feeding port is provided above the barrel of the solid conveying zone. Said venting port is provided above the barrel of said venting zone. Said discharge port is provided at the end of the barrel.

The self-cleaning and extruding method by two co-rotating screws with an internal baffle carried out by the above-mentioned apparatus is comprised of the following steps.

(1) After the materials enter the barrel from the feeding port, the first and second screws co-rotate along their own axes. When the materials enter the solid conveying zone, the feed materials are pushed forward partially under the positive displacement of the first and second screw and partially by friction forces from the first and second screw, so that the materials move toward the melting zone. At the same time, the mixing of components from the first and second screws is achieved due to the action of the baffle in the first screw.

(2) When the materials move to the melting zone, heat transfer is enhanced due to the stir action of the baffle in the first screw channel. Compression action is exerted on the materials and pre-melting is achieved via the compression energy of the second screw. Meanwhile, friction heat is generated by the high speed rotation of each of the screws and, at the same time, the external heat is conducted through the barrel.

Topological chaos is also introduced into the screw channel by the mechanism 'one part divided into two parts, then two parts converging into one part, and then one part divided into two parts once more'. In addition, the cross section of the flow channel will undergo an expansion-compression-expansion action, and the separation of the melt from the solids will be accelerated. At the same time, the baffle in the first screw will cause hyperbolic flow perturbation of the 'figure 8' to generate chaotic mixing. All of these actions work together to accelerate the melting process so that the materials melt efficiently.

(3) When the melt enters the venting zone, the single one-flow channel in the first screw communicates with the two independent channels separated by the screw flight in the second screw, so that the surface area of venting increases. Furthermore, the stir action of the first screw, and the compression and expansion action of the second screw, will accelerate gas to discharge from the venting port, allowing the melt to move further toward the discharging port.

(4) When the melt enters the mixing and extruding zone, the melt is subjected to the topological chaos that resulted from the flow channel, which consists of two screws and a barrel, where the action of "one part divided into two parts, then two parts converging into one part, and then one part divided into two parts once more" is in effect. The baffle in the first screw channel will induce hyperbolic perturbation of the 'figure 8' to generate global chaotic mixing throughout the whole screw channel. In addition, the periodic compression action will lead to elongational flow. All three of these effects will improve the mixing and plasticating of the materials so that the melt is stably extruded from the discharging port. At the same time, a self-cleaning effect is achieved by the inter-wiping effect between each of the screws.

The present invention has the following advantages and beneficial effects as compared with the prior art.

1. In the present invention, the first screw is a one-threaded screw with an internal baffle. In contrast, the second screw has two threads. The two screws rotate at the same speed and engage with each other. This leads to an efficient improvement in eliminating the quality fluctuation caused by the content fluctuation of fed raw materials. Furthermore, such a combination also takes advantage of the powerful conveying ability of the one-threaded screw, thereby increasing the efficiency of solid conveying and the output to a large extent to meet the sizable output requirements.

2. Three mechanisms of mixing enhancement have been realized. (1) Global chaotic mixing is introduced by the hyperbolic perturbation of the resulting 'figure-8'-shaped flow manifold caused by using the baffle. (2) The flow topology formed by the two screws and the barrel can cause topological chaos like 'one part is divided into two parts, then two parts converge into one part, and then one part is again divided into two parts, and so one.' (3) The periodic action like 'compression-expansion-further compression-further expansion' is introduced into the flow channel between the two screws to achieve the elongational flow field. The compression preheat and dispersive mixing can also be achieved so that the mixing and heat transfer are enhanced significantly as a result of a shorter heating and processing history and lower energy consumption.

3. The present invention uses an inter-wiping effect between the first screw and the second screw to carry out a self-cleaning effect during the processing process.

4. The present invention uses an internal baffle and is especially suitable for the partial fill of the screw channel during the course of processing. The elongational effect existing in the flow channel can increase the distributive and dispersive mixing so significantly that nearly no kneading discs are required and better self-cleaning can be achieved along with a much narrower residence time distribution. Thus, the present invention is especially suitable for high throughput processing and for using nanomaterials as fillers.

**Description of Accompanying Drawings**

FIG. 1 is a structural schematic diagram of embodiment 1 in the present invention.
FIG. 2 is an enlarged structural schematic diagram of embodiment 1 cut along E-E in Fig. 1.
FIG. 3 is an enlarged structural schematic diagram of embodiment 1 cut along F-F in Fig. 1.
FIG. 4 is a three-dimensional structural schematic diagram of the screw mechanism and partial barrel in embodiment 1.
FIG. 5 is the first principle schematic diagram of achieving chaotic mixing, topological chaos, and elongation action in embodiment 1.
FIG. 6 is the second principle schematic diagram of achieving chaotic mixing, topological chaos, and elongation action in embodiment 1.
FIG. 7 is the third principle schematic diagram of achieving chaotic mixing, topological chaos, and elongation action in embodiment 1.
FIG. 8 is a structural schematic diagram of the cross-section of the screw mechanism and partial barrel in embodiment 2.
FIG. 9 is a three-dimensional structural schematic diagram of the screw mechanism and partial barrel in Fig. 8 of embodiment 2.
FIG. 10 is a three-dimensional structural schematic diagram of the screw mechanism and partial barrel in embodiment 6.

**Particular Embodiments**

The present invention is further described in detail below by incorporating the embodiments and drawings, but the embodiments of the present invention are not limited thereto.

**Embodiment 1**

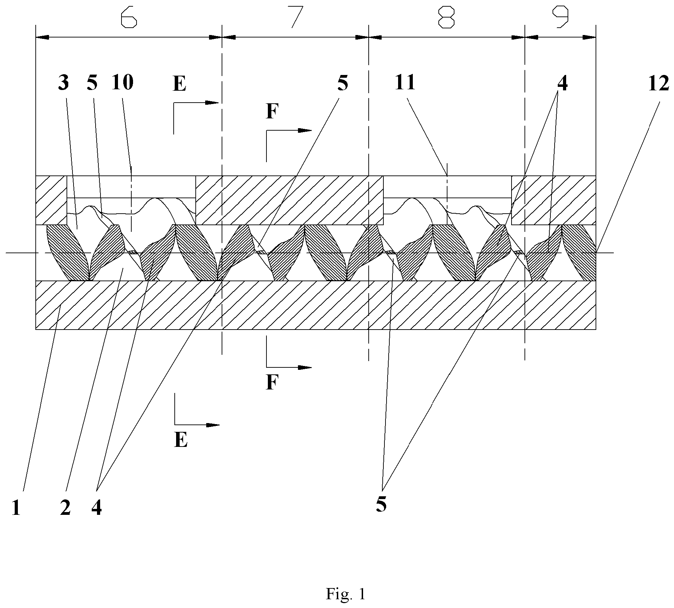

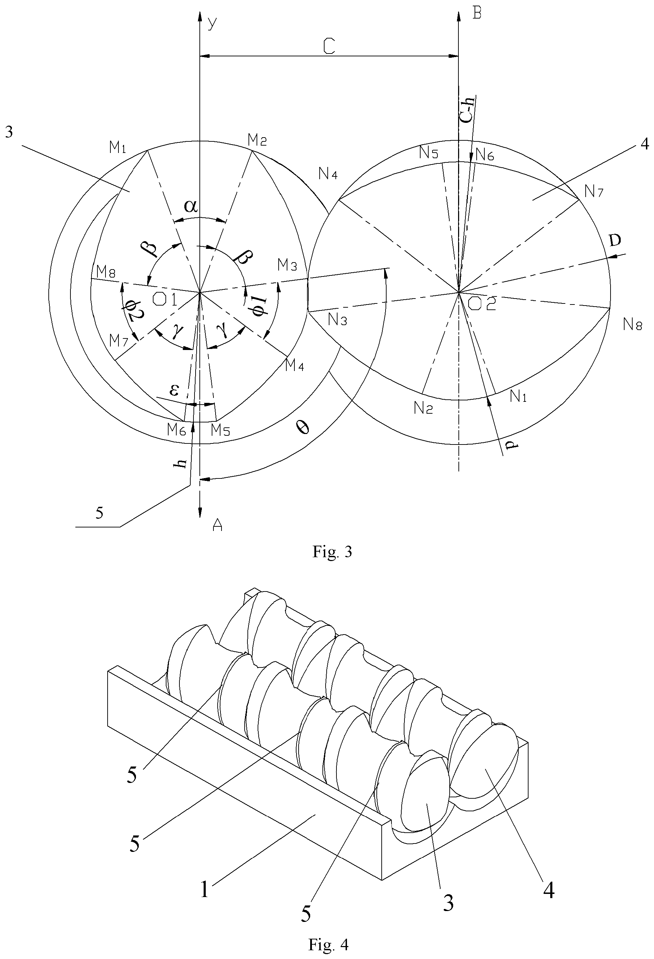

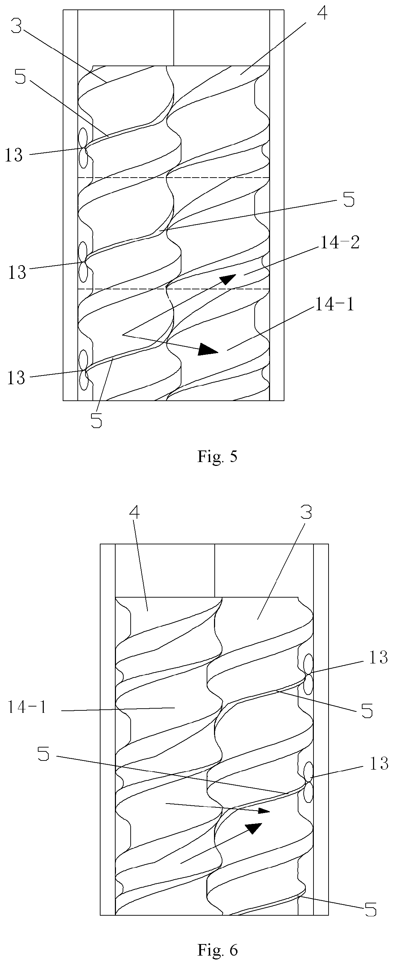

As shown in Figs. 1 through 7, the co-rotating, self-cleaning two-screw extruder with internal baffle is comprised of a screw mechanism and a barrel (1). Said screw mechanism is contained inside the inner section (2) of the barrel (1), and placed horizontally. Said screw mechanism is comprised of the first screw (3) and the second screw (4); the axis of the first screw (3) and the second screw (4) are coincidental with that of the barrel (1). The first screw (3) is a one-threaded configuration, while the second screw (4) is a two-threaded configuration. The first screw has an internal baffle (5), which is lower than the screw flight and causes the hyperbolic perturbation of the 'figure 8' shaped flow manifold as shown in Figs. 5-7. The first screw (3) and the second screw (4) co-rotate at the same speed and touch each other. The first screw and the baffle achieve the self-cleaning function with the channel of the second screw, and the second screw achieves the self-cleaning function with the channel of the first screw. The contour lines of the threads of the first screw (3) and the second screw (4) are tangent to the inner wall of the barrel (1). The flow channel is formed between the outer sides of the first and second screws and the inner side of the barrel. The cross-section counters of the first and second screws are comprised of several circle arcs of different radii, and the number of circle arcs of the first screw and the second screw are the same. As shown in Fig. 4, the inner cavity of the barrel consists of two cylindrical grooves that are communicated, whose cross-sections appear as the hole with the 'figure 8' shape.

According to the motion direction of the materials to be processed, the inner section of the barrel (1) is divided into a solid transporting zone (6), a melting zone (7), a venting zone (8), and a mixing and extruding zone (9). The feeding port (10) is located above the barrel (1) of the solid transporting zone (9). The venting port (11) is located above the barrel (1) of the venting zone (11). Both the feeding port (10) and the venting port (11) are communicated with the barrel (1). The discharging port (12) is located at the end of the barrel (1).

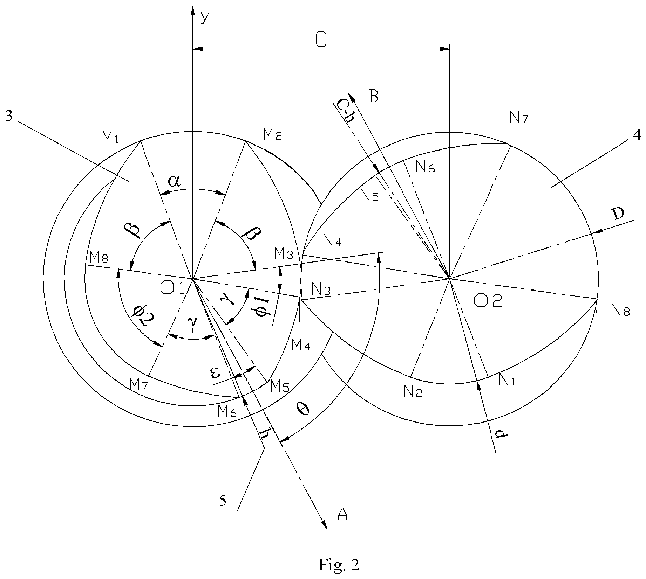

The structure described above is shown in Fig. 2 and 3. The cross-sections of the first and second screws are comprised of 8 circle arcs; the 8 arcs of the first screw are $M_1M_2$, $M_2M_3$, $M_3M_4$, $M_4M_5$, $M_5M_6$, $M_6M_7$, $M_7M_8$, and $M_8M_1$, and those of the second screw are $N_1N_2$, $N_2N_3$, $N_3N_4$, $N_4N_5$, $N_5N_6$, $N_6N_7$, $N_7N_8$, and $N_8N_1$. $M_1M_2$ is engaged with $N_1N_2$, $M_2M_3$ with $N_2N_3$, and so on.

Therein, arc $M_1M_2$ is tangent to the inner cavity (i.e., arc $M_1M_2$ is the outer curve of the first screw) and its corresponding central angle is $\alpha$, which is symmetrical about the polar axis $O_1y$. For the convenience of expression, the first screw (3) and the second screw (4) are simultaneously rotated at an equal angle so that the axis $O_1y$ is always points north. It follows that for different axial positions z, the arc $M_8M_1$, $M_1M_2$, and $M_2M_3$ in the first screw will remain fixed so the arcs $N_8N_1$, $N_1N_2$, and $N_2N_3$, in contrast, the rest of arcs will rotate about their own rotation axis of screws, i.e., $O_1$ or $O_2$, as shown in Fig. 2.

More exactly, the central angle of arcs $M_2M_3$ and $M_8M_1$ are all $\beta$, the central angle of arc $M_4M_5$ and $M_6M_7$ are all $\gamma$, and the central angle of arc $M_3M_4$ and $M_7M_8$ are $\phi1$ and $\phi2$. The arc $M_5M_6$ corresponds to the baffle, which has radius h, where $d/2 \leq h < D/2$. The central angle of $M_5M_6$ is $\varepsilon$, which is symmetrical about $O_1A$, and the angle between axis $O_1A$ and axis $O_1M_3$ equals the polar angle $\theta$, where $\theta$ varies with an increase of axial position z, wherein $0 \leq z \leq L$,

where L denotes the pitch of the first and the second screws. $\theta_{min} \leq \theta \leq \theta_{max}$, where

$$\theta_{\min} = \frac{\alpha}{2} + \frac{\varepsilon}{2} + \beta + \gamma$$

and

$$\theta_{\max} = 2\pi - \left( \alpha + 2\beta + \gamma + \frac{\varepsilon}{2} \right)$$

. The angle $\theta$ shows cyclic variation with an increase of axial position z, as shown below,

$$\theta = \theta_{\min} + \frac{\theta_{\max} - \theta_{\min}}{z_*} z, \qquad z \leq z_* ,$$

Or,

$$\theta = \theta_{\min} + \frac{\theta_{\max} - \theta_{\min}}{z_* - L}(x - L), \qquad z \geq z_*$$

$$\theta = \theta_{\min} + \frac{\theta_{\max} - \theta_{\min}}{z_*} z, \qquad z \leq z_* ,$$

where $z_*$ corresponds to the axial position of $\theta_{max}$, where $0 < z_* < L$, and $z_*/L = 0.5 \sim 0.62$ is preferred. The height of the baffle remains constant with an increase of its axial position.

The arc $M_1M_2$ in the first screw is engaged with the $N_1N_2$ arc in the second screw, as is $M_2M_3$ with $N_2N_3$, $M_3M_4$ with $N_3N_4$, and so on. Therein, the arc $N_5N_6$ is symmetrical about the axis $O_2B$, and the phase difference between the axis $O_2B$ and $O_1A$ is $\pi$, where the arc $N_3N_4$ and $N_7N_8$ are engaged with the inner cavity of the barrel.

The centerline distance between $O_1$, the rotation center of the first screw (3), and $O_2$, the rotation center of the second screw (4), is C, and the maximum diameters of the first and second screws is $D$. At the same time, the minimum diameter of the first and second screws is $d$, the angle degree for the arc $M_2M_3$ and $M_8M_1$ in the first screw is equal to $\beta$, where

$$\beta = 2 \arccos\left( \frac{C}{D} \right)$$

; thus, the angle for the arc $N_2N_3$ and $N_8N_1$ in the second screw is also equal to $\beta$. The angle for the arc $M_4M_5$ and $M_6M_7$ in the first screw is equal to $\gamma$, where

$$\gamma = \pi - \arccos\left( \frac{d^2 + 4h^2 - 4Cd}{4(2C - d)h} \right),$$

, such that the angle for the arc $N_4N_5$ and $N_6N_7$ in the second screw is also equal to $\gamma$.

The arc $M_1M_2$ has a radius value of D/2 and is centered at $O_1$, the rotation center of the first screw. The arcs $M_3M_4$ and $M_7M_8$ have the same radius values, d/2, and their centers are all $O_1$, the rotation center of the first screw. The arc $M_2M_3$ has the radius value C and is tangential to the circle, which is centered at $O_1$ and has the radius value d/2 at the point $M_3$. Thus, the arc $M_8M_1$ has the radius value C and is tangential to the circle, which is centered at $O_1$ and has the radius value d/2 at the point $M_8$. The arc $M_4M_5$ has the radius value C and is tangential to the circle, which is centered at $O_1$ and has the radius value d/2 at the point $M_4$. Thus the arc $M_6M_7$ has the radius value C and is tangential to the circle, which is centered at $O_1$ and has the radius value d/2 at the point $M_7$. The arcs $N_3N_4$ and $N_7N_8$ have the radius value D/2 and their center are all at $O_2$, the rotation center of the second screw. The arc $N_1N_2$ has the radius value d/2 and is centered at $O_2$, the rotation center of the second screw. The arcs $N_2N_3$ and $N_8N_1$ have the same radius value C and are tangential to the circle, which is centered at $O_1$ and has the radius value d/2 at the points $N_1$ and $N_2$. The arcs $N_4N_5$ and $N_6N_7$ have the same radius value C and are tangential to the circle, which is centered at $O_2$ and has the radius value d/2 at the points $N_5$ and $N_6$. The arc $N_5N_6$ has the radius value C-h and is centered at $O_2$, the rotation center of the second screw.

Meanwhile, D / d = 1.1 ~ 5.5; and L, the first and the second screws, is equal to 0.01D ~ 100000D.

The self-cleaning and extruding method by co-rotating two screws with an internal baffle carried out by the above-mentioned apparatus is comprised of the following steps.

(1) After the materials enter the barrel from the feeding port, the first screw and second screw co-rotate along their own axes. When the materials enter the solid conveying zone, the feed material is pushed forward, partially under the positive displacement of the first and the second screw and partially by friction forces from the first and second screw, so that the materials are forced to move toward the melting zone. At the same time, the mixing of components from the first and second screw is achieved due to the action of the baffle in the first screw.

(2) When the materials move to the melting zone, heat transfer is enhanced because of the stir action of the baffle in the first screw channel. Compression action is exerted on the materials and pre-melting is achieved due to the action of the compression energy of the second screw. Meanwhile, friction heat is generated by the high speed rotation of each of the screws. At the same time, external heat is conducted through the barrel.

Topological chaos is also introduced into the screw channel by the mechanism 'one part divided into two parts (as indicated by the arrow in Fig. 5), then two parts converging into one part (as indicated by the arrow in Fig. 6), and then one part divided into two parts once more' (as indicated by the arrow in Fig. 7). In addition, the cross-section of the flow channel will undergo the 'expansion (as indicated by the label 14-1 in Figs. 5 to 7)-compression (as indicated by the label 14-2 in Figs. 5 to 7)-expansion' action, and the separation of the melt from the solids is accelerated. At the same time, the baffle in the first screw will cause hyperbolic flow perturbation in the shape of a 'figure 8' (as indicated by the label 13 in Figs. 5 to 7) to generate chaotic mixing. All of these actions work together to accelerate the melting process such that the materials become a cohesive melt.

When the melt enters the venting zone, the single one-flow channel in the first screw is communicated with the two independent channels separated by the screw flight in the second screw, such that the surface area of venting is increased. Furthermore, the stir action of the first screw, and the compression and expansion action of the second screw, will accelerate gas to discharge from the venting port, and the melt to move further toward the discharge port.

When the melt enters the mixing and extruding zone, the melt is subjected to the topological chaos that is a result of the flow channel, which consists of two screws and a barrel, where the action of "one part divided into two parts, then two parts converging into one part, and then one part divided into two parts once more" is effective. The baffle in the first screw channel will induce hyperbolic perturbation in the shape of a 'figure 8' to generate global chaotic mixing throughout the whole screw channel. In addition, the periodic compression action will lead to elongational flow. These three effects will improve the mixing and plasticating of materials so that the melt is stably extruded from the discharge port. At the same time, a self-cleaning effect will be achieved by the inter-wiping effect between each of the screws.

**Embodiment 2**

The present embodiment has the same structure as that of embodiment 1, except that the polar angle of the baffle remains constant with the variation of its axial position. The structural schematic diagram of the screw mechanism and partial barrel is shown in Figs. 8 and 9.

**Embodiment 3**

The present embodiment has the same structure as that of embodiment 1, except for the following features: the polar angle of the baffle experiences non-linear cyclic changes with the variation of its axial position and meets the terms of the following function:

$$\theta = \theta_{min} + \left(\theta_{max} - \theta_{min}\right)\sin\frac{z\pi}{L}, \qquad 0 \le z \le L \ 。$$

**Embodiment 4**

The present embodiment has the same structure as that of embodiment 1, except for the following features: the polar angle of the baffle experiences non-linear cyclic changes with the variation of its axial position and meets the terms of the following function:

$$\theta = \theta_{min} + \frac{4\left(\theta_{max} - \theta_{min}\right)}{L^2}\left(zL - L^2\right), \qquad 0 \le z \le L \ 。$$

**Embodiment 5**

The present embodiment has the same structure as that of embodiment 1, except for the following features: the polar angle of the baffle experiences non-linear cyclic changes with the variation of its axial position, and meets the terms of the following function:

$$\theta = \theta_{min} + \frac{3125\left(\theta_{max} - \theta_{min}\right)z\left(L - z\right)^4}{256L^5}, \qquad 0 \le z \le L \ ,$$

or

$$\theta = \theta_{min} + \frac{3125\left(\theta_{max} - \theta_{min}\right)z^4\left(L - z\right)}{256L^5}, \qquad 0 \le z \le L \ 。$$

**Embodiment 6**

The present embodiment has the same structure as that of embodiment 1, except for the following features: the height of the baffle experiences non-linear cyclic changes with the variation of its axial position, and meets the terms of the following function:

$$h(z) = \frac{d}{2} + \frac{\left(\sqrt{5} - 1\right)\left(D - d\right)}{2L}\left(\frac{L}{2} - z\right) \qquad 0 \le z \le \frac{L}{2} \ ,$$

or

$$h(z) = \frac{d}{2} + \frac{\left(\sqrt{5} - 1\right)\left(D - d\right)}{2L}\left(z - \frac{L}{2}\right) \qquad z \ge \frac{L}{2} \ 。$$

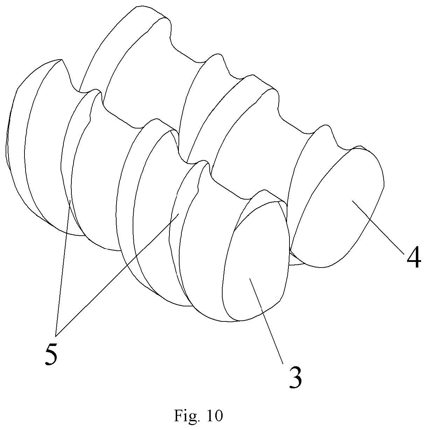

The screw mechanism is shown in Fig. 10.

**Embodiment 7**

The present embodiment has the same structure as that of embodiment 1, except for the following features: the height of the baffle experiences non-linear cyclic changes with the variation of its axial position, and meets the terms of the following function:

$$h(z) = \frac{d}{2} + \frac{2(D-d)}{5}\cos^2\frac{z\pi}{L} \qquad 0 \le z \le \frac{L}{2} \, \text{。}$$

Each of the embodiments described above is the preferred embodiment of the present invention. However, the embodiments of the present invention are not limited to the above-mentioned embodiments; any other changes, modifications, substitutions, combinations, or simplifications made without departing from the spirit and principle of the present invention are all equivalent replacement modes and should be encompassed within the protection scope of the present invention.

**Claims**

1. A co-rotating, self-cleaning extruder with two screws and an internal baffle (5) is comprised of a screw mechanism and a barrel (1); said screw mechanism is provided inside of the inner section (2) of the barrel (1), and placed horizontally; said screw mechanism is comprised of the first screw (3) and the second screw (4), wherein the axes of the first and second screws (4) are coincidental with the axes of the barrel (1), **characterized in that** the first screw (3) has a one-threaded configuration, the second screw (4) has a double-threaded configuration, and the first screw (3) has an internal baffle (5), which is lower than the screw flight; the first and second screws co-rotate at the same speed and keep in touch with each other at all times; the first screw (3) and the baffle achieve the self-cleaning function with the channel of the second screw (4) by inter-wiping, and the second screw (4) achieves the self-cleaning function with the channel of the first screw (3) by inter-wiping, and wherein the outer sides of the first screw (3) and the second screw (4) are tangential to the inner side of the barrel cavity, and the flow channel formed between the first screw (3), the second screw (4), and the inner side of the barrel (1).

2. The co-rotating self-cleaning extruder with two screws and an internal baffle (5) in accordance with claim 1, **characterized in that** the first screw (3) and the baffle and the channel of the second screw (4) are wiped by each other to achieve the self-cleaning function; and the second screw (4) and the channel of the first screw (3) are wiped by each other to achieve the self-cleaning function.

3. The co-rotating self-cleaning extruder with two screws and an internal baffle (5) in accordance with claim 1 or 2 **characterized in that** the internal baffle (5) of the first screw (3) which is lower than the screw flight can cause a hyperbolic perturbation in the shape of a 'figure 8', which generates chaotic mixing throughout the first screw channel.

4. The co-rotating self-cleaning extruder with two screws and an internal baffle (5) in accordance with claim 1, **characterized in that** the cross-sections of the first and second screws (4) are comprised of several circle arcs of different radii, and the number of circle arcs of the first and second screw (4) are the same.

5. The co-rotating self-cleaning extruder with two screws and an internal baffle (5) in accordance with claim 4, **characterized in that** the cross-section of the first and second screw (4) are comprised of eight circle arcs of different radii, where the eight circle arcs of the first screw (3) are $M_1M_2$, $M_2M_3$, $M_3M_4$, $M_4M_5$, $M_5M_6$, $M_6M_7$, $M_7M_8$, and $M_8M_1$; and the eight circle arcs of the second screw (4) are $N_1N_2$, $N_2N_3$, $N_3N_4$, $N_4N_5$, $N_5N_6$, $N_6N_7$, $N_7N_8$, and $N_8N_1$; wherein the arc $M_1M_2$ is engaged with the arc $N_1N_2$; correspondingly, $M_2M_3$ is engaged with $N_2N_3$, $M_3M_4$ with $N_3N_4$, $M_4M_5$ with $N_4N_5$, $M_6M_7$ with $N_6N_7$, $M_7M_8$ with $N_7N_8$, and $M_8M_1$ with $N_8N_1$.

6. The co-rotating self-cleaning extruder with two screws and an internal baffle (5) in accordance with claim 5, **characterized in that** the rotation center of the first screw (3) is $O_1$, arc $M_5M_6$ of the first screw (3) corresponds to the baffle, the polar angle of the baffle experiences cyclic changes or non-cyclic changes, and the polar angle is the angle between the centerline of the baffle and axis $O_1M_3$ of the first screw (3).

7. The co-rotating self-cleaning extruder with two screws and an internal baffle (5) in accordance with claim 5, **characterized in that** the rotation center of the first screw (3) is $O_1$, arc $M_5M_6$ corresponds to the baffle, the polar angle of the baffle is constant, and the polar angle is the angle between the centerline of the baffle and axis $O_1M_3$ of the first screw (3).

8. The co-rotating self-cleaning extruder with two screws and an internal baffle (5) in accordance with claim 5, **characterized in that** the first screw (3), where the height of the baffle is constant, or experiences cyclic changes with the increase of the corresponding axial position.

9. The co-rotating self-cleaning extruder with two screws and an internal baffle (5) in accordance with claim 1, **characterized in that** the inner cavity of the barrel (1) consists of two cylindrical grooves which are communicated, whose cross-section appears as a hole in the shape of a 'figure 8'.

10. The co-rotating self-cleaning extruder with two screws and an internal baffle (5) in accordance with claim 1, **characterized in that** according to the motion direction of the materials to be processed, the inner section (2) of barrel (1) is divided into a solid transporting zone (6), a melting zone (7), a venting zone (8), and a mixing and extruding zone (9); a feeding port (10) located above the barrel (1) of the solid transporting zone (6), a venting port (11) located above the barrel (1) of the venting zone (8), both the feeding port (10) and the venting port (11) are communicated with the barrel (1), and a discharge port (12) located at the end of the barrel (1).

**Patentansprüche**

1. Mitrotierender, selbstreinigender Doppelschneckenextruder mit einer inneren Ablenkplatte (5) bestehend aus einem Schneckenmechanismus und einem Zylinder (1), wobei der Schneckenmechanismus innerhalb des inneren Abschnitts (2) des Zylinders (1) vorgesehen und horizontal angeordnet ist, wobei der Schneckenmechanismus aus der ersten Schnecke (3) und der zweiten Schnecke (4) besteht, wobei die Achsen der ersten und der zweiten Schnecke (4) mit den Achsen des Zylinders (1) zusammenfallen, **dadurch gekennzeichnet, dass** die erste Schnecke (3) mit einem Einfachgewinde ausgeführt ist, die zweite Schnecke (4) mit einem Doppelgewinde ausgeführt ist und die erste Schnecke (3) eine innere Ablenkplatte (5) hat, die niedriger als der Schneckenflügel ist, wobei die erste und die zweite Schnecke mit der gleichen Geschwindigkeit mitrotieren und ständig miteinander in Kontakt bleiben, wobei die erste Schnecke (3) und die Ablenkplatte die Selbstreinigungsfunktion mit dem Kanal der zweiten Schnecke (4) durch gegenseitiges Abstreifen erreichen und die zweite Schnecke (4) die Selbstreinigungsfunktion mit dem Kanal der ersten Schnecke (3) durch gegenseitiges Abstreifen erreicht, und wobei die Außenseiten der ersten Schnecke (3) und der zweiten Schnecke (4) tangential zu der Innenseite des Zylinderhohlraums sind und der Fließkanal zwischen der ersten Schnecke (3), der zweiten Schnecke (4) und der Innenseite des Zylinders (1) gebildet ist.

2. Mitrotierender, selbstreinigender Doppelschneckenextruder mit einer inneren Ablenkplatte (5) nach Anspruch 1, **dadurch gekennzeichnet, dass** die erste Schnecke (3) und die Ablenkplatte und der Kanal der zweiten Schnecke (4) gegenseitig abgestreift werden, um die Selbstreinigungsfunktion zu erreichen, und die zweite Schnecke (4) und der Kanal der ersten Schnecke (3) gegenseitig abgestreift werden, um die Selbstreinigungsfunktion zu erreichen.

3. Mitrotierender, selbstreinigender Doppelschneckenextruder mit einer inneren Ablenkplatte (5) nach Anspruch 1 oder 2, **dadurch gekennzeichnet, dass** die innere Ablenkplatte (5) der ersten Schnecke (3), die niedriger als der Schneckenflügel ist, eine hyperbolische Störung in Form einer "Figur 8" verursachen kann, die eine chaotische Vermischung im gesamten ersten Schneckenkanal erzeugt.

4. Mitrotierender, selbstreinigender Doppelschneckenextruder mit einer inneren Ablenkplatte (5) nach Anspruch 1, **dadurch gekennzeichnet, dass** die Querschnitte der ersten und zweiten Schnecke (4) aus mehreren Kreisbögen mit unterschiedlichen Radien bestehen und die Anzahl der Kreisbögen der ersten und zweiten Schnecke (4) gleich ist.

5. Mitrotierender, selbstreinigender Doppelschneckenextruder mit einer inneren Ablenkplatte (5) nach Anspruch 4, **dadurch gekennzeichnet, dass** der Querschnitt der ersten und zweiten Schnecke (4) aus acht Kreisbögen mit unterschiedlichen Radien besteht, wobei die acht Kreisbögen der ersten Schnecke (3) M1M2, M2M3, M3M4, M4M5, M5M6, M6M7, M7M8 und M8M1 sind, und die acht Kreisbögen der zweiten Schnecke (4) N1N2, N2N3, N3N4, N4N5, N5N6, N6N7, N7N8 und N8N1 sind, wobei der Bogen M1M2 mit dem Bogen N1N2, M2M3 entsprechend mit N2N3, M3M4 mit N3N4, M4M5 mit N4N5, M6M7 mit N6N7, M7M8 mit N7N8, und M8M1 mit N8N1 in Eingriff steht.

6. Mitrotierender, selbstreinigender Doppelschneckenextruder mit einer inneren Ablenkplatte (5) nach Anspruch 5, **dadurch gekennzeichnet, dass** das Rotationszentrum der ersten Schnecke (3) O1 ist, dass der Bogen M5M6 der ersten Schnecke (3) der Ablenkplatte entspricht, dass der Polarwinkel der Ablenkplatte zyklische oder nichtzyklische Änderungen erfährt und der Polarwinkel der Winkel zwischen der Mittellinie der Ablenkplatte und der Achse O1M3 der ersten Schnecke (3) ist.

7. Mitrotierender, selbstreinigender Doppelschneckenextruder mit einer inneren Ablenkplatte (5) nach Anspruch 5, **dadurch gekennzeichnet, dass** das Rotationszentrum der ersten Schnecke (3) O1 ist, dass der Bogen M5M6 der Ablenkplatte entspricht, dass der Polarwinkel der Ablenkplatte konstant ist, und dass der Polarwinkel der Winkel zwischen der Mittellinie der Ablenkplatte und der Achse O1M3 der ersten Schnecke (3) ist.

8. Mitrotierender, selbstreinigender Doppelschneckenextruder mit einer inneren Ablenkplatte (5) nach Anspruch 5, **gekennzeichnet durch** die erste Schnecke (3), in der die Höhe der Ablenkplatte konstant ist oder die zyklische Änderungen mit der Zunahme der entsprechenden axialen Position erfährt.

9. Mitrotierender, selbstreinigender Doppelschneckenextruder mit einer inneren Ablenkplatte (5) nach Anspruch 1, **dadurch gekennzeichnet, dass** der innere Hohlraum des Zylinders (1) aus zwei miteinander verbundenen zylindrischen Nuten besteht, deren Querschnitt als Loch in Form einer "Figur 8" erscheint.

10. Mitrotierender, selbstreinigender Doppelschneckenextruder mit einer inneren Umlenkplatte (5) nach Anspruch 1, **dadurch gekennzeichnet, dass** der innere Abschnitt (2) des Zylinders (1) entsprechend der Bewegungsrichtung der zu verarbeitenden Materialien in eine Feststofftransportzone (6), eine Aufschmelzzone (7), eine Lüftungszone (8) und eine Misch- und Extrusionszone (9) unterteilt ist; eine oberhalb des Zylinders (1) der Feststofftransportzone (6) angeordnete Zuführöffnung (10), eine oberhalb des Zylinders (1) der Lüftungszone (8) angeordnete Lüftungsöffnung (11), wobei sowohl die Zuführöffnung (10) als auch die Lüftungsöffnung (11) mit dem Zylinder (1) in Verbindung stehen und eine an dem Ende des Zylinders (1) angeordnete Auslassöffnung (12).

## Revendications

1. Extrudeuse co-rotative autonettoyante ayant deux vis et un déflecteur interne (5) qui est composée d'un mécanisme à vis et d'un cylindre (1) ; ledit mécanisme à vis est ménagé à l'intérieur de la section interne (2) du cylindre (1), et placé horizontalement ; ledit mécanisme à vis est composé de la première vis (3) et de la seconde vis (4), dans laquelle les axes des première et seconde vis (4) coïncident avec les axes du cylindre (1), **caractérisée en ce que** la première vis (3) possède une configuration à filetage unique, la seconde vis (4) possède une configuration à filetage double, et la première vis (3) possède un déflecteur interne (5), qui est plus bas que le filet de vis ; les première et seconde vis tournent conjointement à la même vitesse et restent en contact l'une avec l'autre à tout instant ; la première vis (3) et le déflecteur accomplissent la fonction d'auto-nettoyage avec le canal de la seconde vis (4) par raclage mutuel, et la seconde vis (4) accomplit la fonction d'auto-nettoyage avec le canal de la première vis (3) par raclage mutuel, et dans laquelle les côtés externes de la première vis (3) et de la seconde vis (4) sont tangents au côté interne de la cavité de cylindre, et au canal d'écoulement formé entre la première vis (3), la seconde vis (4) et le côté interne du cylindre (1).

2. Extrudeuse co-rotative autonettoyante ayant deux vis et un déflecteur interne (5) selon la revendication 1, **caractérisée en ce que** la première vis (3) et le déflecteur et le canal de la seconde vis (4) sont raclés l'un par l'autre pour accomplir la fonction d'auto-nettoyage ; et la seconde vis (4) et le canal de la première vis (3) sont raclés l'un par l'autre pour accomplir la fonction d'auto-nettoyage.

3. Extrudeuse co-rotative autonettoyante ayant deux vis et un déflecteur interne (5) selon la revendication 1 ou 2 **caractérisée en ce que** le déflecteur interne (5) de la première vis (3) qui est plus bas que le filet de vis peut provoquer une perturbation hyperbolique ayant la forme d'un « chiffre 8 », qui génère un mélange chaotique dans tout le premier canal de vis.

4. Extrudeuse co-rotative autonettoyante ayant deux vis et un déflecteur interne (5) selon la revendication 1, **caractérisée en ce que** les sections transversales des première et seconde vis (4) sont composées de plusieurs arcs de cercle de différents rayons, et le nombre d'arcs de cercle de la première et de la seconde vis (4) sont identiques.

5. Extrudeuse co-rotative autonettoyante ayant deux vis et un déflecteur interne (5) selon la revendication 4, **caractérisée en ce que** les sections transversales des première et seconde vis (4) sont composées de huit arcs de cercle de différents rayons, où les huit arcs de cercle de la première vis (3) sont $M_1M_2$, $M_2M_3$, $M_3M_4$, $M_4M_5$, $M_5M_6$, $M_6M_7$, $M_7M_8$, et $M_8M_1$ ; et les huit arcs de cercle de la seconde vis (4) sont $N_1N_2$, $N_2N_3$, $N_3N_4$, $N_4N_5$, $N_5N_6$, $N_6N_7$, $N_7N_8$, et $N_8N_1$ ; dans laquelle
l'arc $M_1M_2$ est mis en prise avec l'arc $N_1N_2$ ; corrélativement, $M_2M_3$ est mis en prise avec $N_2N_3$, $M_3M_4$ avec $N_3N_4$, $M_4M_5$ avec $N_4N_5$, $M_6M_7$ avec $N_6N_7$, $M_7M_8$ avec $N_7N_8$, et $M_8M_1$ avec $N_8N_1$.

6. Extrudeuse co-rotative autonettoyante ayant deux vis et un déflecteur interne (5) selon la revendication 5, **carac-**

**térisée en ce que** le centre de rotation de la première vis (3) est $O_1$, l'arc $M_5M_6$ de la première vis (3) correspond au déflecteur, l'angle polaire du déflecteur subit des variations cycliques ou des variations non cycliques, et l'angle polaire est l'angle entre la ligne centrale du déflecteur et l'axe $O_1M_3$ de la première vis (3).

7. Extrudeuse co-rotative autonettoyante ayant deux vis et un déflecteur interne (5) selon la revendication 5, **caractérisée en ce que** le centre de rotation de la première vis (3) est $O_1$, l'arc $M_5M_6$ correspond au déflecteur, l'angle polaire du déflecteur est constant, et l'angle polaire est l'angle entre la ligne centrale du déflecteur et l'axe $O_1M_3$ de la première vis (3).

8. Extrudeuse co-rotative autonettoyante ayant deux vis et un déflecteur interne (5) selon la revendication 5, **caractérisée en ce que** la première vis (3), où la hauteur du déflecteur est constante, ou subit des variations cycliques avec l'augmentation de la position axiale correspondante.

9. Extrudeuse co-rotative autonettoyante ayant deux vis et un déflecteur interne (5) selon la revendication 1, **caractérisée en ce que** la cavité interne du cylindre (1) est constituée de deux rainures cylindriques qui communiquent, dont la section transversale apparaît comme un trou ayant la forme d'un « chiffre 8 ».

10. Extrudeuse co-rotative autonettoyante ayant deux vis et un déflecteur interne (5) selon la revendication 1, **caractérisée en ce que** selon la direction de déplacement des matières à traiter, la section interne (2) du cylindre (1) est divisée en une zone de transport de solides (6), une zone de fusion (7), une zone de purge (8) et une zone de mélange et d'extrusion (9) ; un orifice d'alimentation (10) est situé au-dessus du cylindre (1) de la zone de transport de solides (6), un orifice de purge (11) est situé au-dessus du cylindre (1) de la zone de purge (8), à la fois l'orifice d'alimentation (10) et l'orifice de purge (11) communiquent avec le cylindre (1), et un orifice d'évacuation (12) est situé à l'extrémité du cylindre (1) .

Fig. 1

Fig. 2

Fig. 3

Fig. 4

Fig. 5

Fig. 6

Fig. 7

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03020493 A1
- WO 2013128463 A1
- US 4300839 A
- DE 102008029306 A1
- US 3667733 A